(19) Europäisches Patentamt / European Patent Office / Office européen des brevets

(11) **EP 3 828 722 A2**

(12) **EUROPEAN PATENT APPLICATION**

(43) Date of publication:
**02.06.2021 Bulletin 2021/22**

(51) Int Cl.:
**G06F 16/00** *(2019.01)*

(21) Application number: **21165306.8**

(22) Date of filing: **26.03.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **28.09.2020 CN 202011045272**

(71) Applicant: **Beijing Baidu Netcom
Science and Technology Co., Ltd.
Beijing 100085 (CN)**

(72) Inventors:
• **DAI, Mingyang**
**Beijing (CN)**
• **SHI, Yixuan**
**Beijing (CN)**
• **LIU, Zixiang**
**Beijing (CN)**
• **YANG, Shengwen**
**Beijing (CN)**

(74) Representative: **Brunner, John Michael Owen
Carpmaels & Ransford LLP
One Southampton Row
London WC1B 5HA (GB)**

(54) **METHOD AND APPARATUS OF CONSTRUCTING A FUSED RELATIONSHIP NETWORK, ELECTRONIC DEVICE AND MEDIUM**

(57) The present disclosure provides a method of constructing a fused relationship network, which relates to a field of user relationship mining and user profile depicting. The method includes: obtaining interaction data from a plurality of data sources, wherein the interaction data contains a plurality of user relationship information; generating, based on the identification information for each user in each user relationship information, a node for the user in the fused relationship network, and generating, based on the interaction information between two users in each user relationship information, an edge between the nodes for the two users in the fused relationship network, wherein a same user identification is generated as one node. The present disclosure further provides an apparatus of constructing a fused relationship network, an electronic device, and a storage medium.

200

Fig. 2

EP 3 828 722 A2

**Description**

**TECHNICAL FIELD**

The present disclosure relates to a field of data processing, and in particular to a field of user relationship mining and user profile depicting. More particularly, the present disclosure provides a method and an apparatus of constructing a fused relationship network, an electronic device and a storage medium.

**BACKGROUND**

With a continuous development of computer and Internet technology, various application platforms have emerged. Daily interaction operations of a user on various application platforms on the Internet reflect preferences and relationship networks of the user. Preferences and relationship networks of a user are widely used in the fields of information dissemination and personalized recommendation, etc.

At present, operation data for users on a single platform is generally used as a data source for applications such as analysis and mining of user relationships. However, a single data source has a single data type, a small number of users covered, and a small amount of information generated, restricting application of user relationship networks.

**SUMMARY**

The present disclosure provides a method and an apparatus of constructing a fused relationship network, an electronic device and a storage medium.

According to a first aspect, there is provided a method of constructing a fused relationship network, comprising: obtaining interaction data from a plurality of data sources, wherein the interaction data contains a plurality of user relationship information, and each user relationship information of the plurality of user relationship information contains identification information for two users having an interaction relationship and interaction information generated at one of the plurality of data sources between the two users; generating, based on the identification information for each user in each user relationship information, a node for the user in the fused relationship network, and generating, based on the interaction information between two users in each user relationship information, an edge between the nodes for the two users in the fused relationship network, wherein a same user identification is generated as one node.

According to a second aspect, there is provided an apparatus of constructing a fused relationship network, comprising: an obtaining module, configured to obtain interaction data from a plurality of data sources, wherein the interaction data contains a plurality of user relationship information, and each user relationship information of the plurality of user relationship information contains identification information for two users having an interaction relationship and interaction information generated at one of the plurality of data sources between the two users; and a generating module, configured to generate based on the identification information for each user in each user relationship information, a node for the user in the fused relationship network, and generate, based on the interaction information between two users in each user relationship information, an edge between the nodes for the two users in the fused relationship network, wherein a same user identification is generated as one node.

According to a third aspect, there is provided an electronic device, comprising: at least one processor; and a memory, communicatively coupled with the at least one processor; wherein the memory stores instructions capable of being executed by the at least one processor, and the instructions, when executed by the at least one processor, cause the at least one processor to perform the method of constructing a fused relationship network provided by the present disclosure.

According to a fourth aspect, there is provided a non-transitory computer readable storage medium storing computer instructions and configured to cause the computer to perform the method of constructing a fused relationship network provided by the present disclosure.

It should be understood that the content described in this section is not intended to identify the key or important features of the embodiments of the present disclosure, and is not intended to limit the scope of the present disclosure. Other features of the present disclosure may be easily understood through the following description.

**BRIEF DESCRIPTION OF THE ACCOMPANYING DRAWINGS**

The accompanying drawings are used to better understand the present disclosure, and do not constitute a limitation to the present disclosure, wherein:

Fig. 1 is a schematic system architecture to which a method and apparatus of constructing a fused relationship network may be applied according to an embodiment of the present disclosure;

Fig. 2 is a flowchart of a method of constructing a fused relationship network according to an embodiment of the present disclosure;

Fig. 3A is a schematic diagram of generating a fused relationship network according to an embodiment of the present disclosure;

Fig. 3B is a schematic simulation diagram of a fused relationship network according to an embodiment of the present disclosure;

Fig. 4 is a schematic diagram of calculating a relationship closeness degree between two nodes according to an embodiment of the present disclosure;

Fig. 5 is a schematic diagram of calculating a relationship closeness degree between two nodes according to another embodiment of the present disclosure;

Fig. 6 is a block diagram of an apparatus of constructing a fused relationship network according to an embodiment of the present disclosure; and

Fig. 7 is a block diagram of an electronic device for a method of constructing a fused relationship network according to an embodiment of the present disclosure.

## DETAILED DESCRIPTION

Hereinafter, schematic embodiments of the present disclosure may be described with reference to the accompanying drawings, various details of the embodiments of the present disclosure are included to facilitate understanding, and the details should be considered as merely exemplary. Therefore, those of ordinary skill in the art should realize that various changes and modifications may be made to the embodiments described herein without departing from the scope and spirit of the present disclosure. In addition, for clarity and conciseness, descriptions of well-known structures and technologies are omitted in the following description.

An understanding of user relationships is an important dimension to depict users. In addition to physical relationships between offline users such as classmates, colleagues, and family members, daily interaction relationships of users on various APPs, websites and other user products on the Internet also reflect user preferences and relationship networks. However, a relationship network established by simply using one user product has a single type and covers a small number of users.

Compared with an online or offline relationship network formed by a single data source, a cross-user-product fused relationship network may bring a more complete description and depiction of interaction behavior between users. Compared with a user relationship network separately mined for each user product, the fused relationship network may make a synergistic effect. In short, the fused relationship network may play a role of one plus one greater than two. That is, if users have interaction relationships in different user products, depiction of these users should also be appropriately weighted, and there should be specific considerations when defining and mining relationships.

In a process of realizing the present disclosure, the inventor found that it is possible to establish a "User-to-POI" network based on a POI (Point Of Interest) visited by a user on an electronic map. The POI is coordinate point marking data on the electronic map used to mark a government department, a commercial organization (such as a gas station, a shopping mall, a supermarket, etc.), a tourist attraction and other places associated with the coordinate point. In addition, in an electronic map searching scenario, a plurality of "User-to-Query" information may be obtained based on a place searched by the user. The information may include, for example, a place searched by the user and a category label for the place, for example, XX Shop, and cosmetic as a category label. Based on the place involved in the "User-to-Query" information and same as the place involved in the "User-to-POI" network, a plurality of "User-to-Query" information may be fused into the "User-to-POI" network. Schematically, the category label for the place in the "User-to-Query" information may be added to the "User-to-POI" network, so that information in the "User-to-POI" network may be more complete, and may provide rich data support for subsequent mining of user needs.

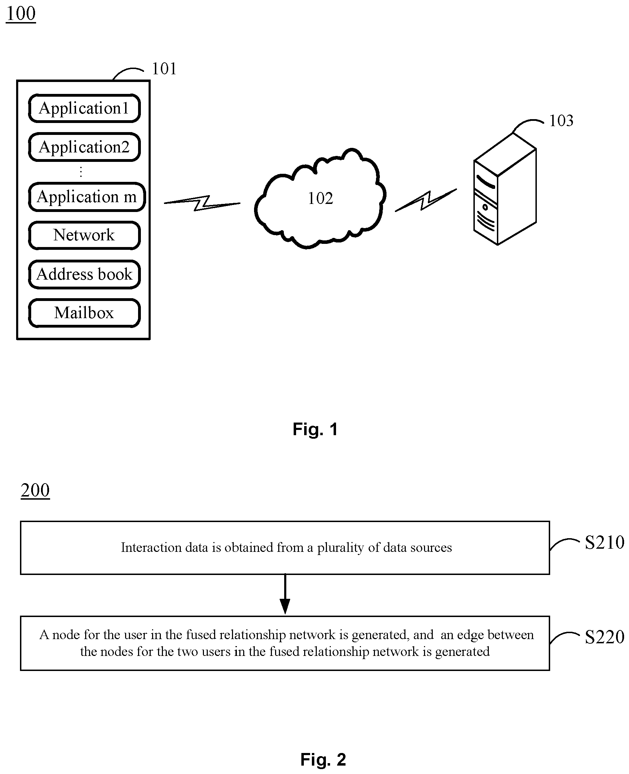

Fig. 1 is a schematic system architecture 100 to which a method and apparatus of constructing a fused relationship network may be applied according to an embodiment of the present disclosure. It should be noted that Fig. 1 is only an example of a system architecture in which the embodiments of the present disclosure may be applied, so as to help those skilled in the art to understand the technical content of the present disclosure. It does not mean that the embodiments of the present disclosure cannot be used for other apparatuses, systems or scenes.

As shown in Fig. 1, a system architecture 100 of this embodiment may include a plurality of application platforms 101, a network 102 and a server 103. The network 102 is used to provide a medium of a communication link between the application platform 101 and the server 103. The network 102 may include various connection types, such as wired and/or wireless communication links, and so on.

The application platform 101 may be a platform providing various user services, including but not limited to m applications, websites, mailboxes, and address books, etc., wherein m is an integer greater than or equal to 1. Schematically, the application may include APPs such as Social application APP1, Communication application APP2, Forum application APP3, Network disk application APP4, and Short video application APP5. Websites may include various social websites, gaming websites, shopping websites, and travelling websites. The address book may include a telephone number address book, a mailbox friend address book, and a friend address book for various applications. The server 103 may be an electronic device having a certain computing capability, and is not limited here.

A user may generate a large amount of operating data by operating via the application platform 101. The operating data may include interaction data generated by interaction between the user and other users, and the interaction data may include an interaction type and interaction content. Schematically, interaction data for the user in APP1 may include liking, replying, forwarding, commenting, etc. Interaction data for the user in APP3 may include commenting, replying, replying under replying, etc. Interaction data for the user in APP2 may include sharing, liking, grabbing red envelopes, etc. Interaction data for the user in the mailbox may include replying, copying, reminding, etc.

The server 103 may obtain interaction data in each application platform 101, and fuse the interaction data from each application platform 101, i.e., merge an interaction relationship of a same user existing in different application platforms 101, and for each interaction relationship, an appropriate weight may be allocated according to different interaction types and/or application platform sources to more reasonably describe a relationship closeness degree between users.

The method of constructing a fused relationship network provided by the embodiments of the present disclosure may generally be performed by the server 103. Correspondingly, the apparatus of constructing a fused relationship network provided by the embodiments of the present disclosure may generally be set in the server 103.

It should be understood that the number of application platforms, network, and server in Fig. 1 is merely illustrative. According to implementation needs, there may be any number of application platforms, networks and servers.

Fig. 2 is a flowchart of a method of constructing a fused relationship network according to an embodiment of the present disclosure.

As shown in Fig. 2, the method of constructing a fused relationship network 200 may include operations S210 to S220.

In operation S210, interaction data from a plurality of data sources is obtained.

According to an embodiment of the present disclosure, the interaction data may contain a plurality of user relationship information, each user relationship information of the plurality of user relationship information contains identification information for two users having an interaction relationship, and the two users may be called a user pair. Each user relationship information further includes interaction information generated at one of the plurality of data sources by the user pair.

According to an embodiment of the present disclosure, the plurality of data sources may be at least one of: at least one application, at least one website, and at least one address book. Schematically, the application may include APPs such as APP1, APP2, APP3, APP4, and APP5. The website may include various social websites, gaming websites, shopping websites, and travelling websites. The address book may include a telephone number address book, a mailbox friend address book, and a friend address book for various applications.

According to an embodiment of the present disclosure, the interaction information may include a plurality of interaction types, for example, at least one of unidirectional following, bidirectional following, sharing, commenting, forwarding, replying, copying, reminding, replying under replying, liking, and grabbing red envelopes.

Schematically, the user relationship information may include different interaction types of interaction information generated by a same user pair on a same data source. For example, User A and User B follow each other on APP1, generating a user relationship information (also called interaction relationship information), and User A likes comment of User B on APP1, generating a user relationship information. The user relationship information may further include interaction information generated by a same user pair on different data sources. For example, User A and User B follow each other on APP1, generating a user relationship information, and User A comments on posted content of User B on APP3, generating a user relationship information. The user relationship information may also include interaction information generated by different user pairs on a same or different data sources. For example, User A and User B follow each other on APP1, generating a user relationship information, User B forwards posted content of User C on APP1, generating a user relationship information, and User A grabs a red envelope of User C on APP2, generating a user relationship information, etc.

In operation S220, a node for the user in the fused relationship network is generated, based on the identification information for each user in each user relationship information, and an edge between the nodes for the two users in the fused relationship network is generated, based on the interaction information between two users in each user relationship information, and a same user identification is generated as one node.

According to the embodiment of the present disclosure, the identification information for the user may be the a user account of the user at the plurality of data sources, such as an ID of the user on APP1, an ID of the user on APP2, and an ID of the user on APP3, etc. The user identification for each user may generate a node of the fused relationship network. For example, the ID of the user on APP1 may generate a node of the fused relationship network.

According to an embodiment of the present disclosure, IDs of a user in different APPs, websites, or address books may be the same or different. A same user ID from different data sources may be merged into one node, so that user relationship information from different data sources may be merged. For example, if the ID of the user on APP1, APP2, and APP3 are all User A, then the ID on APP1, APP2, and APP3 may be merged as Node A.

According to an embodiment of the present disclosure, the identification information for the user may further contain at least one of a telephone number, a device identification, a Media Access Control (MAC) address, and a browser cache (Cookie) identification. The MAC address is an address written in a hardware (such as a network card) by a device manufacturer, and the Cookie is data storing in a local terminal of the user for the website to identify the user. Schematically, for a user having different IDs in different APPs, websites, or address books, whether different user IDs belong to a same node may be determined according to at least one of a telephone number registered in an APP and website by the user, a telephone number of the user in an address book, an identification for a device used by the user, a MAC identification written in a hardware by a device manufacturer and a Cookie identification used to identify the user and generated in response to an apparatus visiting a website. It should be noted that any identification information capable of indicating an identity of a user may be used to determine whether different user IDs belong to a same user, and is not limited in the present disclosure.

According to an embodiment of the present disclosure, the interaction information between a user pair in each user relationship information may generate an edge between nodes for the user pair in the fused relationship network. Schematically, identification information for User A generates Node A of the fused relationship network, identification information for User B generates Node B of the fused relationship network, and the interaction information between User A and User B generates an edge between Node A and Node B. The edge carries the interaction information between User A and User B on the data source.

According to an embodiment of the present disclosure, user relationship networks may be constructed separately for interaction data of each data source, and a plurality of user relationship networks for single data sources may be obtained. An amount of information of the fused relationship network provided by the embodiment of the present disclosure has a following relationship to an amount of information of the user relationship network for the plurality of single data sources described above.

If the user relationship networks for the plurality of single data sources do not have any intersection, i.e., the user relationship networks for each single data source are independent, then the amount of information obtained by mining the user relationship networks for the plurality of single data sources separately is the same as the amount of information obtained by mining the fused relationship network provided according to the embodiment of the present disclosure.

However, if an intersection exists between different data sources, i.e., some users have interaction behaviors on a plurality of data sources, the information gain brought by the intersection is an additional value mined by using the fused relationship network provided according to the embodiment of the present disclosure. The information gain may be expressed as Gain(X, Y), and Gain(X, Y)may be expressed by the following Formula 1.

$$\text{Gain}(X, Y) = H(X) - \sum_i^n H(y_i) \quad \text{(Formula 1)}$$

X is the fused relationship network provided according to the embodiment of the present disclosure, and H(X) is an information entropy mined by the fused relationship network provided according to the embodiment of the present disclosure. n is a quantity of data sources, n is an integer greater than 1, i is an integer greater than or equal to 1 and less than or equal to n, Y is a user relationship network for a single data source, $y_i$ is a user relationship network for an i-th single data source, and $H(y_i)$ is an information entropy obtained by mining the user relationship network of the i-th single data source. Gain (X, Y) is the information gain of the fused relationship network provided according to the embodiment of the present disclosure compared to the user relationship network of a plurality of single data sources. Those skilled in the art may understand that the greater the previous user intersection of each data source, the higher the information gain.

Those skilled in the art may understand that, according to an embodiment of the present disclosure, interaction data from a plurality of data sources is obtained. The interaction data contains a plurality of user relationship information, and each user relationship information of the plurality of user relationship information contains identification information for two users having an interaction relationship and interaction information generated at one of the plurality of data sources between the two users. A node for the user in the fused relationship network is generated, based on the identification information for each user in each user relationship information, and an edge between the nodes for the two users in the fused relationship network is generated, based on the interaction information between two users in each user relationship information, and a same user identification is generated as one node. According to the embodiment of the present disclosure, user relationship information from different data sources may be fused to generate a fused relationship network, so that the user coverage of the fused relationship network is larger, the amount of information is richer and more comprehensive, and is beneficial to an application extension of the user relationship network.

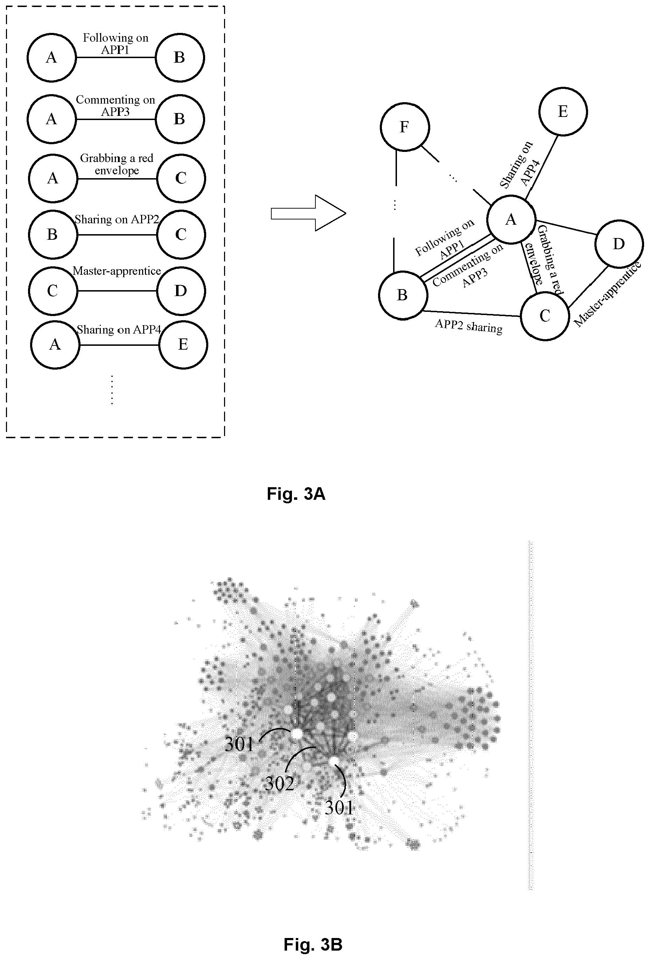

Fig. 3A is a schematic diagram of generating a fused relationship network according to an embodiment of the present disclosure.

According to an embodiment of the present disclosure, the interaction data from a plurality of data sources includes a plurality of user relationship information, and each user relationship information of the plurality of user relationship information contains identification information for two users having an interaction relationship and interaction information generated at one of the plurality of data sources between the two users. For example, as shown in Fig. 3A, identification information for User A is denoted as A, identification information for User B is denoted as B... identification information for User F is denoted as F, and the plurality of data sources may include, for example, APP1, APP2, APP3, APP4, address book, mailbox, etc. Schematically, User A and User B follow each other on APP1, and A comments on a post of B on APP3, generating two user relationship information. As shown in Fig. 3A, one user relationship information contains identification information for User A, identification information for User B, and interaction information between User A and User B. The interaction information may include at least one of the interaction type and the data source of the interaction, in Fig. 3A, the interaction information includes both, i.e., following each other on APP1. The other user information contains identification information for User A, identification information for User B, and interaction information between User A and User B, i.e., A commenting on the post of B in APP3. Similarly, interaction between other users also generates corresponding user relationship information. For example, a data source of interaction between User B and User C is APP2, an interaction type is sharing, etc.

In addition, user relationship information may further include physical relationships between users. Schematically, information in a telephone address book and a mailbox address book in a plurality of data sources may characterize an offline physical relationship between users, and a physical relationship between a user and other users may be determined according to identity information of other users noted in an address book by the user. Schematically, User C identifies User D as "Teacher XX" in a telephone address book, and the relationship between User C and User D may be determined as a master-apprentice relationship.

According to an embodiment of the present disclosure, nodes of the fused relationship network may be generated based on the user identification information for each user, and an edge between two nodes may be generated based on the interaction information of each user relationship information to obtain the fused relationship network.

Schematically, as shown in Fig. 3A, a fused relationship network shown on the right side of Fig. 3A may be generated based on the user relationship information shown on the left side of Fig. 3A. For example, for a first user relationship information of User A and User B listed on the left side of Fig. 3A, Node A in the fused relationship network may be generated based on the identification information for User A, for example, the identification information for User A may be stored as a fused Node A in the relationship network, Node B in the fused relationship network may be generated based on the identification information for User B, and an edge between Node A and Node B in the fused relationship network may be generated based on the interaction information between User A and User B (i.e., following each other on APP1). For a second user relationship information of User A and User B listed on the left side of Fig. 3A, Node A and Node B in the fused relationship network may not be changed, i.e., a same user identification is fused into one node, and based on the interaction information between User A and User B (commenting on APP3), another edge between Node A and Node B of the fused relationship network may be generated. Thus, in the fused relationship network, Node A, Node B, and two edges between Node A and Node B are generated. In a similar manner, other nodes B, C, D, E, F, etc. and edges between these nodes are generated in the fused relationship network. As shown in Fig. 3A, the generated fused relationship network may include nodes A to F. There are two edges between Node A and Node B, and the two edges respectively carry interaction information "following on APP1" and interaction information "commenting on APP3"; an edge between Node A and Node C carries interaction information "grabbing red envelopes on APP2"; an edge between Node B and Node C carries interaction information "sharing on APP2", an edge between Node A and Node E carries interaction information "share on APP4", Node C and Node D have a master-apprentice relationship, etc.

The identification information for the user may be user accounts of the user in a plurality of data sources, such as an account of the user on APP1, an account of the user on APP2, and an account of the user on APP3, etc. For example, the identification information for User A may generate Node A in the fused relationship network, and the identification information for User B may generate Node B in the fused relationship network, etc. According to an embodiment of the present disclosure, accounts of a user in different applications, websites, or address books may be the same or different. A same user account from different data sources may be merged into one node. For example, if the accounts of the user on APP1, APP2, and APP3 are all User A, then the accounts of the user on APP1, APP2, and APP3 may be merged as Node A.

In some embodiments, the user identification information may contain at least one of a user account, a telephone number, a device identification, a MAC address, and a Cookie identification. Schematically, for a user having different accounts in different APPs, websites, or address books, whether different user accounts belong to a same node may be determined according to at least one of a telephone number registered in an APP and website by the user, a telephone number of the user in an address book, an identification for a device used by the user, a MAC identification written in a hardware by a device manufacturer and a Cookie identification used to identify the user and generated in response to an apparatus visiting a website. It should be noted that any identification information capable of indicating an identity of a user may be used to determine whether different user accounts belong to a same user, and is not limited in the present disclosure.

According to an embodiment of the present disclosure, the interaction information of each user relationship information may further include interaction content generated by the interaction operation of the user, for example, comment content and reply content. The content may be recorded on a side of user relationship information as data basis for subsequent user relationship mining and information recommendation.

Fig. 3B is a schematic simulation diagram of a fused relationship network according to an embodiment of the present disclosure.

According to an embodiment of the present disclosure, a fused relationship network as shown in Fig. 3B includes a plurality of nodes 301 and a plurality of edges 302. The node 301 may be generated based on user identification information from one or more data sources. For example, the node 301 may include the above-mentioned nodes A to F, and may also include some of the nodes A to F or other nodes. The edge 302 may carry interaction information of different interaction types and different data sources. For example, an edge 302 may carry interaction information having an interaction type of bidirectional following from APP1 and interaction information having an interaction type of commenting from APP3.

According to an embodiment of the present disclosure, the fused relationship network includes interaction information from different data sources and different types of interactions. Compared with a traditional user relationship network, the information coverage is wide, the number of users involved is large, and the fused relationship network may be used to provide strong support for subsequent user relationship mining and user personalized recommendation.

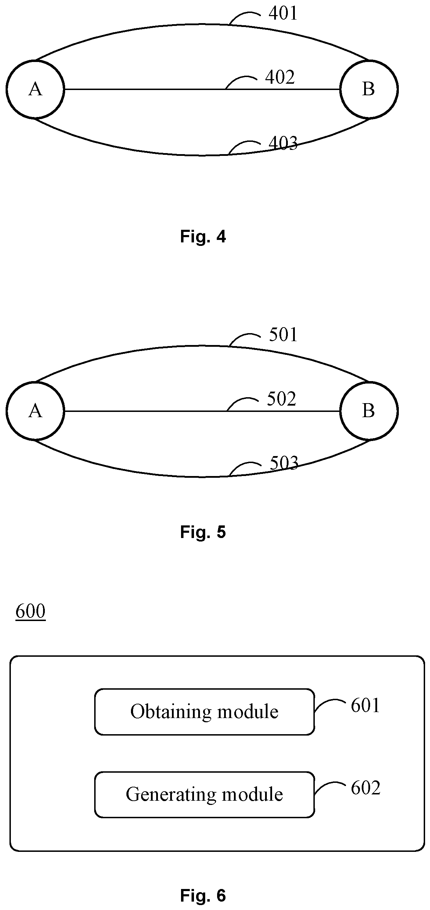

Fig. 4 is a schematic diagram of calculating a relationship closeness degree between two nodes according to an embodiment of the present disclosure.

According to an embodiment of the present disclosure, if two same nodes have different interaction types of interaction information on a same data source, suitable weights may be set for edges between the two nodes for different interaction types to describe a closeness degree between the user pair more reasonably, and the weight may be called an interaction type weight.

Schematically, the interaction type may include at least one of bidirectional following, unidirectional following, sharing, commenting, forwarding, replying, copying, reminding, replying under replying, liking, and grabbing red envelopes. For edges of different interactions types, different interaction type weights may be set. For example, an interaction type weight for an edge having an interaction type of bidirectional following may be set as 10, an interaction type weight for an edge having an interaction type of unidirectional following may be set as 4, an interaction type weight for an edge having an interaction type of sharing may be set as 10, an interaction type weight for an edge having an interaction type of commenting may be set as 2, an interaction type weight for an edge having an interaction type of forwarding may be set as 10, and an interaction type weight for an edge having an interaction type of liking may be set as 1, etc.

Schematically, taking any two nodes Node A and Node B having an interaction relationship in the fused relationship network as an example, calculation of a relationship closeness degree between two nodes provided in the present disclosure may be described. The identification information for User A generates Node A, and the identification for User B generates Node B.

As shown in Fig. 4, there are three edges between Node A and Node B, namely edge 401, edge 402 and edge 403. Interaction information carried by edge 401 may be User A and User B following each other on APP1, interaction information carried by edge 402 may be User A liking comment of User B on APP1, and interaction information carried by edge 403 may be User A commenting on a post of User B on APP3.

According to an embodiment of the present disclosure, an interaction type weight is set for each edge according to the interaction type of the interaction information carried by each edge. For example, an interaction type weight for an edge having an interaction type of bidirectional following may be set as 10, an interaction type weight for an edge having an interaction type of liking may be set as 1, and an interaction type weight for an edge having an interaction type of commenting may be set as 2. Then the interaction type weight for edge 401 is set as 10, the interaction type weight for edge 402 is set as 1, and the interaction type weight for edge 403 is set as 2.

According to an embodiment of the present disclosure, based on the interaction type weight for each edge, the relationship closeness degree between Node A and Node B may be calculated. Schematically, the relationship closeness degree between Node A and Node B may be a sum of the interaction type weights of edge 401, edge 402, and edge 403. For example, if the interaction type weight for edge 401 is 10, the interaction type weight for edge 402 is 1, and the interaction type weight for edge 403 is 2, then the relationship closeness degree between Node A and Node B is 13. It should be noted that there may be a plurality of calculation methods for the relationship closeness degree between Node A and Node B. For example, the interaction type weights of edge 401, edge 402, and edge 403 may be weighted averaged to obtain the relationship closeness degree between Node A and Node B. The present disclosure does not limit this.

Those skilled in the art may understand that according to an embodiment of the present disclosure, since different interaction types may characterize closeness degree of the interaction between users, different weights are set for different interaction types, interaction types such as following each other, sharing, and forwarding may be set with higher weights, and interaction types such as liking, replying, and reminding may be set with lower weights, so as to more accurately and reasonably describe the relationship between users. In addition, for user relationship information with a lower interaction type closeness degree, such as liking, the corresponding weight is low, but via a plurality of fusion from different data sources, a higher weight may also be achieved, playing an important role in subsequent relationship mining.

Fig. 5 is a schematic diagram of calculating a relationship closeness degree between two nodes according to another embodiment of the present disclosure.

According to an embodiment of the present disclosure, according to actual requirements, different weights may be set for different data sources of each edge, and the weight may be called a data source weight. Schematically, if a participation degree of a user in a topic in APP3 needs to be noticed, a higher weight may be set for an edge for user relationship information from APP3. For example, a data source weight for an edge for user relationship information having a data source of APP3 may be set as 10, a data source weight for an edge for user relationship information having a data source of APP4 may be set as 5, a data source weight for an edge for user relationship information having a data source of APP1 may be set as 1, and a data source weight for an edge for user relationship information having a data source of APP2 may be set as 2, etc.

According to an embodiment of the present disclosure, different interaction type weights may also be set for edges for different interaction types. For example, an interaction type weight for an edge having an interaction type of bidirectional following may be set as 10, an interaction type weight for an edge having an interaction type of unidirectional following may be set as 4, an interaction type weight for an edge having an interaction type of sharing may be set as 10, an interaction type weight for an edge having an interaction type of commenting may be set as 2, an interaction type weight for an edge having an interaction type of forwarding may be set as 10, and an interaction type weight for an edge having an interaction type of liking may be set as 1, etc.

Schematically, taking any two nodes Node A and Node B having an interaction relationship in the fused relationship network as an example, calculation of a relationship closeness degree between two nodes provided in the present disclosure may be described. The identification information for User A generates Node A, and the identification for User B generates Node B.

As shown in Fig. 5, there are three edges between Node A and Node B, namely edge 501, edge 502 and edge 503. Interaction information carried by edge 501 may be User A and User B following each other on APP1, interaction information carried by edge 502 may be User A liking comment of User B on APP1, and interaction information carried by edge 503 may be User A commenting on a post of User B on APP3.

According to an embodiment of the present disclosure, an interaction type weight is set for each edge according to the interaction type of the interaction information carried by each edge. For example, an interaction type weight for an edge having an interaction type of bidirectional following may be set as 10, an interaction type weight for an edge having an interaction type of liking may be set as 1, and an interaction type weight for an edge having an interaction type of commenting may be set as 2. A data source weight is set for each edge according to a data source of the interaction information carried by each edge. For example, a data source weight for an edge for user relationship information having a data source of APP1 may be set as 1, and a data source weight for an edge for user relationship information having a data source of APP3 may be set as 10. Then a data source weight for edge 501 is set to 1, a data source weight for edge 502 is set to 1, and a data source weight for edge 503 is set to 10.

According to an embodiment of the present disclosure, based on the data source weight and the interaction type weight for each edge, the relationship closeness degree between Node A and Node B may be calculated. Schematically, a product between the data source weight and the interaction type weight for each edge may be calculated to obtain a comprehensive weight for the edge, and a sum of the comprehensive weights for each edge may be calculated to obtain a relationship closeness degree between Node A and Node B. For example, a data source weight for edge 501 is 1, and an interaction type weight is 10, then a comprehensive weight for edge 501 is 10. A data source weight for edge 502 is 1, and an interaction type weight is 1, so a comprehensive weight for edge 502 is 1. A data source weight for edge 503 is 10, and an interaction type weight is 2, so a comprehensive weight for edge 503 is 20. A sum of the comprehensive weight for edge 501, the comprehensive weight for edge 502, and the comprehensive weight for edge 503 is 31, and the relationship closeness degree between Node A and Node B is 31. It should be noted that there may be a plurality of calculation methods for the relationship closeness degree between Node A and Node B. For example, a sum of the data source weight and the interaction type weight for each edge may be calculated as the comprehensive weight for the edge, and a weighted average of the comprehensive weights for the three edges may be performed to obtain the relationship closeness degree between Node A and Node B. The present disclosure does not limit this.

Those skilled in the art may understand that according to an embodiment of the present disclosure, since different interaction types may characterize closeness degree of the interaction between users, different weights are set for different interaction types, interaction types such as following each other, sharing, and forwarding may be set with higher weights, and interaction types such as liking, replying, and reminding may be set with lower weights, so as to more accurately and reasonably describe the relationship between users. In addition, since the interaction relationship of different data sources may characterize the closeness degree of the user interaction relationship on different products, setting different weights for different data sources may target the user relationship of a user on different products.

It can be understood that for user relationship information with a lower weight, if the user relationship information exists in a plurality of data sources, a higher weight may be achieved via a plurality of fusion from different data sources, playing an important role in subsequent relationship mining.

Fig. 6 is a block diagram of an apparatus of constructing a fused relationship network according to an embodiment of the present disclosure.

As shown in Fig. 6, the apparatus of constructing a fused relationship network 600 may include an obtaining module 601 and a generating module 602.

The obtaining module 601 is used to obtain interaction data from a plurality of data sources. The interaction data contains a plurality of user relationship information, and each user relationship information of the plurality of user relationship information contains identification information for two users having an interaction relationship and interaction information generated at one of the plurality of data sources between the two users.

The generation module 602 is used to generate, based on the identification information for each user in each user relationship information, a node for the user in the fused relationship network, and generate, based on the interaction information between two users in each user relationship information, an edge between the nodes for the two users in the fused relationship network, and a same user identification is generated as one node.

According to an embodiment of the present disclosure, the apparatus of constructing a fused relationship network 600 further includes a calculating module.

According to an embodiment of the present disclosure, the calculating module is used to for two nodes having at least one edge between each other, based on the at least one edge between the two nodes, calculate a relationship closeness degree between the two nodes.

According to an embodiment of the present disclosure, each edge carries an interaction type of the interaction information, and the calculating module includes a first allocating unit and a first calculating unit.

The first allocating unit is used to allocate an interaction type weight for the edge for each of the at least one edge, based on the interaction type of the interaction information carried by the edge.

The first calculating unit is used to calculate the relationship closeness degree between the two nodes based on each interaction type weight for the at least one edge.

According to an embodiment of the present disclosure, each edge carries the interaction type of the interaction information and the data source of the interaction information, and the calculating module further includes a second allocating unit, a second calculating unit, and a third calculating unit.

The second allocating unit is used to for each of the at least one edge, allocate the interaction type weight for the edge, based on the interaction type of the interaction information carried by the edge, and allocate a data source weight for the edge, based on the data source of the interaction information carried by the edge.

The second calculating unit is used to calculate a comprehensive weight for the edge based on the interaction type weight and the data source weight.

The third calculating unit is used to calculate the relationship closeness degree between the two nodes, based on each comprehensive weight for the at least one edge.

According to an embodiment of the present disclosure, the interaction type comprises at least one of unidirectional following, bidirectional following, sharing, commenting, forwarding, replying, copying, reminding, replying under replying, liking, and grabbing red envelopes.

According to an embodiment of the present disclosure, the interaction information between the two users contains information generated by an interaction operation between the two users.

According to an embodiment of the present disclosure, the identification information for the user comprises a user account of the user at the plurality of data sources.

According to an embodiment of the present disclosure, the identification information for the user contains at least one of a telephone number, a device identification, a Media Access Control address, and a browser cache identification.

According to an embodiment of the present disclosure, the plurality of data sources comprises at least one of: at least one application, at least one address book, and at least one website.

According to an embodiment of the present disclosure, the present disclosure further provides an electronic device and a readable storage medium.

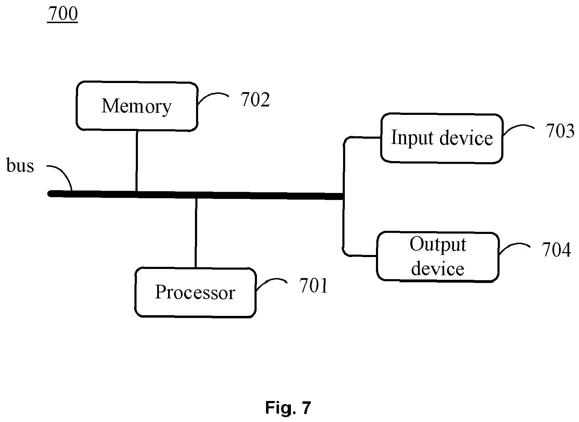

Fig. 7 is a block diagram of an electronic device for the method of constructing a fused relationship network according to an embodiment of the present disclosure. Electronic devices are intended to represent various forms of digital computers, such as laptop computers, desktop computers, workstations, personal digital assistants, servers, blade servers, mainframe computers, and other suitable computers. Electronic devices can also represent various forms of mobile devices, such as personal digital processors, cellular phones, smart phones, wearable devices, and other similar computing devices. The components as illustrated herein and connections, relationships, and functions thereof are merely examples, and are not intended to limit the implementation of the disclosure as described and/or required herein.

As shown in Fig. 7, the electronic device 700 includes one or more processors 701, a memory 702, and interface(s) for connecting various components, including high-speed interface(s) and low-speed interface(s). The various components are connected to each other by using different buses, and can be installed on a common motherboard or installed in other manners as required. The processor may process instructions executed in the electronic device, including instructions stored in or on the memory to display graphical information of GUI (Graphical User Interface) on an external input/output apparatus (such as a display device coupled to an interface). In other embodiments, a plurality of processors and/or a plurality of buses may be used with a plurality of memories if necessary. Similarly, a plurality of electronic devices can be connected in such a manner that each electronic device providing a part of necessary operations (for example, as a server array, a group of blade servers, or a multi-processor system). One processor 701 is taken as an example in Fig. 7.

The memory 702 is the non-transitory computer-readable storage medium provided by this disclosure. The memory stores instructions executable by at least one processor, to cause the at least one processor to execute the method of constructing a fused relationship network provided by the disclosure. The non-transitory computer-readable storage medium of the present disclosure stores computer instructions for allowing a computer to execute the method of constructing a fused relationship network provided by the present disclosure.

As a non-transitory computer-readable storage medium, the memory 702 can be used to store non-transitory software programs, non-transitory computerexecutable programs, and modules, such as program instructions /modules (for example, the acquiring module 601 and the generating module 602 shown in Fig. 6) corresponding to the method of constructing the fused relational network in the embodiment of the present disclosure. The processor 701 performs various functional applications and data processing of the server by executing the non-transitory software programs, instructions, and modules stored in the memory 702, thereby implementing the method of constructing a fused relationship network in the embodiments of method described above.

The memory 702 may include a program storage area and a data storage area. The program storage area may store an operating system and an application program required by at least one function. The data storage area may store data etc. generated by using the electronic device 700 according to the method of constructing the fused relational network. In addition, the memory 702 may include a high-speed random access memory, and may further include a non-transitory memory, such as at least one magnetic disk storage device, a flash memory device, or other non-transitory solid-state storage devices. In some embodiments, the memory 702 may optionally include a memory located remotely with respect to the processor 701, and such remote memory may be connected to the electronic device 700 for the method of constructing a fused relationship network through a network. Examples of the network described above include, but are not limited to, Internet, intranet, local area network, mobile communication network, and combination thereof.

The electronic device 700 for the method of constructing a fused relationship network may further include: an input apparatus 703 and an output apparatus 704. The processor 701, the memory 702, the input apparatus 703, and the output apparatus 704 may be connected by a bus or in other manners. In Fig. 7, the connection by a bus is taken as an example.

The input apparatus 703 may receive input information of numbers or characters, and generate key input signals related to user settings and function control of the electronic device 700 for the method of constructing a fused relationship network, such as touch screen, keypad, mouse, trackpad, touchpad, indicator stick, one or more mouse buttons, trackball, joystick and other input apparatuses. The output apparatus 704 may include a display device, an auxiliary lighting device (for example, LED), a tactile feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein can be implemented in digital electronic circuit systems, integrated circuit systems, application-specific ASICs (application-specific fused circuits), computer hardware, firmware, software, and/or combinations thereof. These embodiments may be implemented by one or more computer programs executed and/or interpreted at a programmable system including at least one programmable processor. The programmable processor can be a dedicated or general-purpose programmable processor, which may receive data and instructions from a storage system, at least one input apparatus, and at least one output apparatus, and transmit the data and instructions to the storage system, the at least one input apparatus, and the at least one output apparatus.

These computer programs (also referred as programs, software, software applications, or codes) include machine instructions for programmable processors, and may be implemented using high-level programming languages, object-oriented programming languages, and/or assembly/machine language to implement these calculation procedures. As used herein, the terms "machine-readable medium" and "computer-readable medium" refer to any computer program product, device, and/or device (e.g., magnetic disks, optical disks, memory, programmable logic devices (PLD)) for providing machine instructions and/or data to a programmable processor, including machine-readable media for receiving machine instructions as machine-readable signals. The term "machine-readable signal" refers to any signal for providing machine instructions and/or data to a programmable processor.

In order to implement interaction with the user, the systems and technologies described herein may be implemented by a computer including a display device (for example, CRT (Cathode Ray Tube) or LCD (Liquid Crystal Display)) display) for displaying information to the user; and a keyboard and a pointing device (for example, a mouse or a trackball) through which the user may provide the input to the computer. Other types of devices may also be used to implement interaction with the user. For example, the feedback provided to the user may be any form of sensory feedback (e.g., visual feedback, auditory feedback, or tactile feedback), and the input received from the user may be any form (including acoustic input, voice input, or tactile input).

The systems and technologies described herein may be implemented in a computing system including back-end components (for example, as a data server), or a computing system including middleware components (for example, an application server), or a computing system including front-end components (for example, a user computer having a graphical user interface or a web browser through which the user can interact with the implementation of the systems and technologies described herein), or a computing system including any combination of such back-end components, middleware components, or front-end components. The components of the system can be connected to each other through digital data communication (for example, a communication network) in any form or through any medium. Examples of communication networks include: LAN (Local Area Network), WAN (Wide Area Network), and Internet.

A computer system may include a client and a server. The client and server are generally far away from each other and usually interact through a communication network. The relationship between the client and the server is generated through computer programs running on the corresponding computers and having a client-server relationship with each other.

According to an embodiment of the present disclosure, interaction data from a plurality of data sources is obtained. The interaction data contains a plurality of user relationship information, and each user relationship information of the plurality of user relationship information contains identification information for two users having an interactive relationship and interaction information generated at one of the plurality of data sources between the two users; a node for the user in the fused relationship network is generated, based on the identification information for each user in each user relationship information, and an edge between the nodes of the two users in the fused relationship network is generated, based on the interaction information between two users in each user relationship information, and a same user identification is generated as one node. According to an embodiment of the present disclosure, user relationships from different data sources can be fused to generate a fused relationship network, so that the user coverage of the fused relationship network is larger, the amount of information is richer and more comprehensive, and is beneficial to an application extension of the user relationship network.

It should be understood that steps of the processes illustrated above can be reordered, added or deleted in various manners. For example, the steps described in the present disclosure can be performed in parallel, sequentially, or in different orders, as long as a desired result of the technical solution of the present disclosure can be achieved, and this is not limited herein.

The above embodiments do not constitute a limitation on the scope of protection of the disclosure. Those skilled in the art should understand that various modifications, combinations, sub-combinations, and substitutions can be made according to design requirements and other factors. Any modifications, equivalent replacements and improvements made within the spirit and principles of the disclosure shall be included in the scope of the disclosure.

**Claims**

1.  A method (200) of constructing a fused relationship network, comprising:

    obtaining (S210) interaction data from a plurality of data sources, wherein the interaction data contains a plurality of user relationship information, and each user relationship information of the plurality of user relationship information contains identification information for two users having an interaction relationship and interaction information generated at one of the plurality of data sources between the two users;
    generating (S220), based on the identification information for each user in each user relationship information, a node for the user in the fused relationship network, and
    generating (S220), based on the interaction information between two users in each user relationship information, an edge between the nodes for the two users in the fused relationship network, wherein a same user identification is generated as one node.

2.  The method (200) of claim 1, further comprising: for two nodes having at least one edge between each other, based on the at least one edge between the two nodes, calculating a relationship closeness degree between the two nodes.

3. The method (200) of claim 2, wherein each edge carries an interaction type of the interaction information, and the calculating a relationship closeness degree between the two nodes comprises:

allocating an interaction type weight for the edge, for each of the at least one edge, based on the interaction type of the interaction information carried by the edge; and
calculating the relationship closeness degree between the two nodes, based on each interaction type weight for the at least one edge.

4. The method (200) of claim 2, wherein each edge carries the interaction type of the interaction information and the data source of the interaction information, and the calculating a relationship closeness degree between the two nodes comprises:

for each of the at least one edge,

allocating the interaction type weight for the edge, based on the interaction type of the interaction information carried by the edge,
allocating a data source weight for the edge, based on the data source of the interaction information carried by the edge, and
calculating a comprehensive weight for the edge based on the interaction type weight and the data source weight; and

calculating the relationship closeness degree between the two nodes, based on each comprehensive weight for the at least one edge.

5. The method (200) of claim 3, wherein the interaction type comprises at least one of unidirectional following, bidirectional following, sharing, commenting, forwarding, replying, copying, reminding, replying under replying, liking, and grabbing red envelopes.

6. The method (200) of any preceding claim, wherein the interaction information between the two users contains information generated by an interaction operation between the two users.

7. The method (200) of any preceding claim, wherein the identification information for the user comprises a user account of the user at the plurality of data sources.

8. The method (200) of any preceding claim, wherein the identification information for the user contains at least one of a telephone number, an device identification, a Media Access Control address, and a browser cache identification.

9. The method (200) of any preceding claim, wherein the plurality of data sources comprises at least one of: at least one application, at least one address book, and at least one website.

10. An apparatus (600) of constructing a fused relationship network, comprising: an obtaining module (601), configured to obtain interaction data from a plurality of data sources, wherein the interaction data contains a plurality of user relationship information, and each user relationship information of the plurality of user relationship information contains identification information for two users having an interaction relationship and interaction information generated at one of the plurality of data sources between the two users; and
a generating module (602), configured to generate, based on the identification information for each user in each user relationship information, a node for the user in the fused relationship network, and generate, based on the interaction information between two users in each user relationship information, an edge between the nodes for the two users in the fused relationship network, wherein a same user identification is generated as one node.

11. An electronic device (700), comprising:

at least one processor (701); and
a memory (702), communicatively coupled with the at least one processor; wherein,
the memory stores instructions capable of being executed by the at least one processor, and the instructions, when executed by the at least one processor, cause the at least one processor to perform the method of any preceding claim.

12. A non-transitory computer readable storage medium storing computer instructions and configured to cause the computer to perform the method of any preceding claim.

13. A computer program including executable instructions and configured to cause the computer to perform the method of any preceding claim.

<u>100</u>

**Fig. 1**

<u>200</u>

| Interaction data is obtained from a plurality of data sources | S210 |
|---|---|
| A node for the user in the fused relationship network is generated, and an edge between the nodes for the two users in the fused relationship network is generated | S220 |

**Fig. 2**

**Fig. 3A**

**Fig. 3B**

401

402

403

A      B

**Fig. 4**

501

502

503

A      B

**Fig. 5**

600

| Obtaining module | 601 |

| Generating module | 602 |

**Fig. 6**

700

**Fig. 7**